# EUROPÄISCHE PATENTANMELDUNG

(11) **EP 4 333 173 A1**
(43) Veröffentlichungstag der Anmeldung: **06.03.2024**
(21) Anmeldenummer: 22193668.5
(22) Anmeldetag: 02.09.2022
(51) Int. Cl.: H01M 50/202, H01M 50/213, H01M 50/247, H01M 50/258, H01M 10/613, H01M 10/6235, H01M 10/643, H01M 10/6551, H01M 10/6562

(54) **HALTEEINRICHTUNG FÜR AKKUZELLEN**

(71) Anmelder: Hilti Aktiengesellschaft, 9494 Schaan (LI)
(72) Erfinder: Seltmann, Daniel, 86899 Landsberg am Lech (DE); Hartmann, Markus, 87665 Mauerstetten (DE); Britz, Rory, 86807 Buchloe (DE); Stanger, Robert, 87600 Kaufbeuren (DE); Hauser, Klaus, 86830 Schwabmünchen (DE); Frenzel, Mathias, 86944 Unterdießen (DE); Ender, Moses, 9470 Buchs (CH)
(74) Vertreter: Hilti Aktiengesellschaft Corporate Intellectual Property

(57) **Zusammenfassung**

Akkumulator als Energieversorgung für eine Werkzeugmaschine mit wenigstens einem ersten und zweiten Energiespeicherelement.

An dem Akkumulator ist wenigstens eine erste Halteeinrichtung zum Aufnehmen und Halten des wenigstens ersten Energiespeicherelements und wenigstens eine zweite Halteeinrichtung zum Aufnehmen und Halten des wenigstens zweiten Energiespeicherelements enthalten, wobei wenigstens ein Teilbereich einer Außenmantelfläche der wenigstens ersten und/oder zweiten Halteeinrichtung so ausgestaltet ist, dass zwischen benachbarten Halteeinrichtung wenigstens eine Aussparung für ein Kühlfluid vorgesehen ist.

Werkzeugmaschine mit wenigstens einem Akkumulator.

## Beschreibung

Die vorliegende Erfindung betrifft ein Akkumulator als Energieversorgung für eine Werkzeugmaschine mit wenigstens einem ersten und zweiten Energiespeicherelement.

Des Weiteren betrifft eine Werkzeugmaschine mit wenigstens einem Akkumulator.

Akkumulatoren als Energieversorgung für eine Werkzeugmaschine sind gemäß dem Stand der Technik weitgehend bekannt. Diese Akkumulator enthalten eine Anzahl an Energiespeicherzellen (auch Akkuzellen genannt), die zum Aufnehmen, Speichern sowie Abgeben von elektrischer Energie dienen und ausgestaltet sind. Das Aufnehmen von elektrischer Energie in die Energiespeicherzellen kann auch als Laden (bzw. Aufladen) bezeichnet werden. Das Abgeben von elektrischer Energie aus den Energiespeicherzellen kann auch als Entladen bezeichnet werden.

Ein Problem bei der Verwendung des Akkumulators, d.h. beim Laden und Entladen, ist das ungewollte bzw. unvermeidliche Erwärmen der Energiespeicherzellen. Durch die Erwärmen der Energiespeicherzellen verläuft das Laden und Entladen nicht optimal bzw. verlängert sich der Laden- bzw. Entladevorgang erheblich.

Aufgabe der vorliegenden Erfindung ist das vorstehend beschriebene Problem zu lösen.

Die Aufgabe wird ebenfalls gelöst durch den Gegenstand des Anspruchs 1 und 10. Weitere vorteilhafte Ausführungen der Erfindung sind in den Unteransprüchen beschrieben.

Die Aufgabe wird insbesondere gelöst durch Akkumulator als Energieversorgung für eine Werkzeugmaschine mit wenigstens einem ersten und zweiten Energiespeicherelement.

Erfindungsgemäß ist vorgesehen, dass wenigstens eine erste Halteeinrichtung zum Aufnehmen und Halten des wenigstens ersten Energiespeicherelements und wenigstens eine zweite Halteeinrichtung zum Aufnehmen und Halten des wenigstens zweiten Energiespeicherelements enthalten ist, wobei wenigstens ein Teilbereich einer Außenmantelfläche der wenigstens ersten und/oder zweiten Halteeinrichtung so ausgestaltet ist, dass zwischen benachbarten Halteeinrichtung wenigstens eine Aussparung für ein Kühlfluid vorgesehen ist. Hierdurch kann eine effektive Kühlung der Energiespeicherelemente erreicht werden.

Entsprechend einem vorteilhaften Ausführungsbeispiel kann es möglich sein, dass wenigstens eine erste Halteeinrichtung zum Aufnehmen und Halten des wenigstens ersten Energiespeicherelements und wenigstens eine zweite Halteeinrichtung zum Aufnehmen und Halten des wenigstens zweiten Energiespeicherelements enthalten ist, wobei wenigstens ein Teilbereich einer Außenmantelfläche der wenigstens ersten und/oder zweiten Halteeinrichtung so ausgestaltet ist, dass zwischen benachbarten Halteeinrichtung wenigstens eine Aussparung für ein Kühlfluid vorgesehen ist.

Gemäß einem weiteren vorteilhaften Ausführungsbeispiel kann es möglich sein, dass wenigstens eine Rahmenvorrichtung zum Aufnehmen und Halten der wenigstens ersten und zweiten Halteeinrichtung enthalten ist. Hierdurch können die Energiespeicherelemente in den Halteeinrichtungen zusätzlich gestützt bzw. in Position gehalten werden.

Entsprechend einem weiteren vorteilhaften Ausführungsbeispiel kann es möglich sein, dass die wenigstens erste und zweite Halteeinrichtung mittels einer Verbindungseinrichtung miteinander verbunden sind. Durch die Verbindungseinrichtung kann eine gegenseitiges Abstützen der Halteeinrichtungen erreicht werden. Darüber hinaus können mehrere Halteeinrichtungen vor der Positionierung innerhalb eines Gehäuses des Akkumulators miteinander verbunden werden, sodass die Montage des Akkumulators schneller und effizienter erfolgen kann.

Gemäß einem weiteren vorteilhaften Ausführungsbeispiel kann es möglich sein, dass die Verbindungseinrichtung ausgestaltet ist, dass die die wenigstens erste und zweite Halteeinrichtung wiederlösbar miteinander verbunden sind. Hierdurch kann eine modulare und flexible Verbindung der Halteeinrichtungen zueinander bzw. Montage des Akkumulators erreicht werden.

Entsprechend einem weiteren vorteilhaften Ausführungsbeispiel kann es möglich sein, dass die Verbindungseinrichtung ausgestaltet ist, dass die wenigstens erste und zweite Halteeinrichtung fest miteinander verbunden sind. Hierdurch kann eine stabile bzw. robuste Verbindung der Halteeinrichtungen zueinander erreicht werden, die einer hohen mechanischen Belastung standhalten kann.

Gemäß einem weiteren vorteilhaften Ausführungsbeispiel kann es möglich sein, dass an wenigstens einem Teilbereich einer Außenmantelfläche der ersten und/oder zweiten Halteeinrichtung wenigstens ein Kühlelement enthalten ist. Hierdurch kann auf eine verbesserte Kühlleistung erreicht werden.

Entsprechend einem weiteren vorteilhaften Ausführungsbeispiel kann es möglich sein, dass das wenigstens eine Kühlelement als Kühlrippe ausgestaltet ist. Hierdurch kann auch einfache und effektive Art eine verbesserte Kühlleistung erreicht werden.

Gemäß einem weiteren vorteilhaften Ausführungsbeispiel kann es möglich sein, dass die wenigstens erste und/oder zweite Halteeinrichtung eine polygone Außenmantelfläche enthält. Hierdurch kann die Positionierung benachbarter Halteeinrichtungen zueinander erleichtert werden bzw. eine multi-direktionale Anordnung der Halteeinrichtungen zueinander erreicht werden.

Entsprechend einem weiteren vorteilhaften Ausführungsbeispiel kann es möglich sein, dass die wenigstens erste Halteeinrichtung eine erste Ausgestaltung einer Außenmantelfläche und die wenigstens zweite Halteeinrichtung eine zweite Ausgestaltung einer Außenmantelfläche aufweist. Es ist insbesondere möglich, dass Halteeinrichtungen, die an einer Seitenfläche des Gehäuses des Akkumulators positioniert sind, wenigstens an einer Außenmantelfläche keine oder lediglich kleinere Kühlelemente aufweisen. Hierdurch kann die entsprechende Halteeinrichtung enger bzw. dichter an die Seitenfläche des Gehäuses des Akkumulators positioniert sein.

Darüber hinaus kann die Aufgabe gelöst werden durch eine erfindungsgemäße Werkzeugmaschine mit wenigstens einem Akkumulator.

Weitere Vorteile ergeben sich aus der folgenden Figurenbeschreibung. In der Figur ist ein besonders bevorzugtes Ausführungsbeispiel der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In der Figur sind gleiche und gleichartige Komponenten mit gleichen Bezugszeichen beziffert.

Es zeigt:
- Figur 1: eine seitliche Ansicht auf Werkzeugmaschine mit einem Akkumulator;
- Figur 2: eine perspektivische Ansicht auf Halteeinrichtungen gemäß einer ersten Ausführungsform zum Aufnehmen und Halten von Energiespeicherelementen;
- Figur 3: eine Frontansicht auf Halteeinrichtungen gemäß einer zweiten Ausführungsform;
- Figur 4: eine Frontansicht auf Halteeinrichtungen gemäß einer zweiten Ausführungsform in einem Gehäuse des Akkumulators;

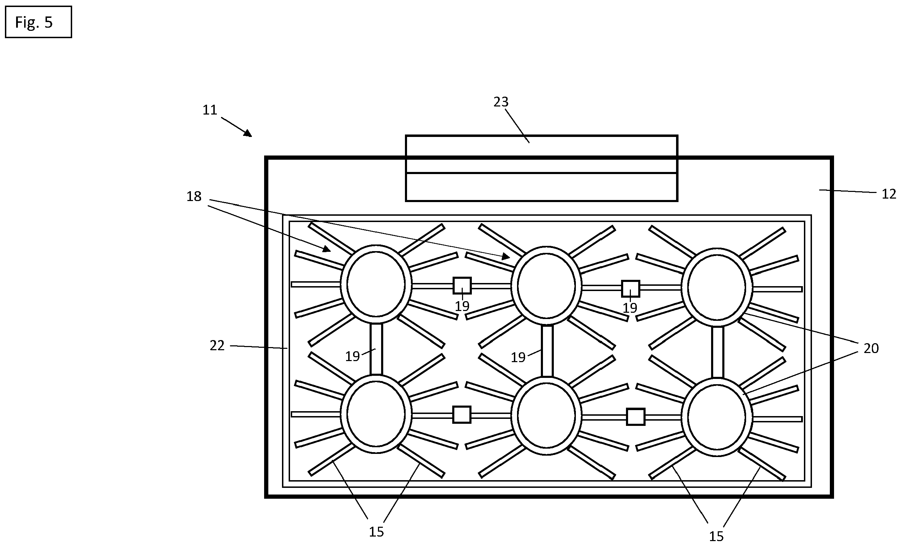

- Figur 5: eine Frontansicht auf Halteeinrichtungen gemäß einer dritten Ausführungsform in einem Gehäuse des Akkumulators;
- Figur 6: eine Frontansicht auf Halteeinrichtungen gemäß einer vierten Ausführungsform in dem Gehäuse des Akkumulators;
- Figur 7: eine perspektivische Ansicht auf Halteeinrichtungen gemäß der vierten Ausführungsform in dem Gehäuse des Akkumulators;
- Figur 8: eine perspektivische Ansicht auf Halteeinrichtungen gemäß einer fünften Ausführungsform in dem Gehäuse des Akkumulators;
- Figur 9: eine perspektivische Ansicht auf Halteeinrichtungen gemäß einer sechsten Ausführungsform in einer ersten Anordnung;
- Figur 10: eine perspektivische Ansicht auf Halteeinrichtungen gemäß der sechsten Ausführungsform in einer zweiten Anordnung;
- Figur 11: eine perspektivische Ansicht auf Halteeinrichtungen gemäß einer siebten Ausführungsform in einer ersten Anordnung; und
- Figur 12: eine perspektivische Ansicht auf Halteeinrichtungen gemäß der siebten Ausführungsform in einer zweiten Anordnung.

### Ausführunasbeispiele:

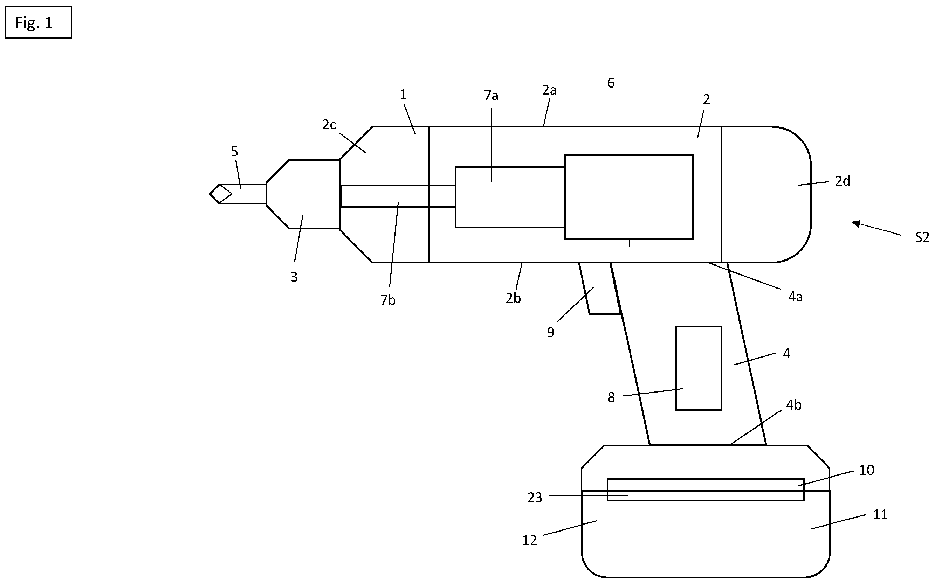

Figur 1 zeigt eine Werkzeugmaschine 1 und einen Akkumulator 11 gemäß einer beispielhaften Ausführungsform.

Die Werkzeugmaschine 1 ist in der gezeigten Ausführungsform als Schrauber ausgestaltet. Alternativ kann die Werkzeugmaschine 1 auch als Bohrmaschine, einen Bohrhammer, eine Säge, ein Schleifgerät oder dergleichen ausgestaltet sein.

Wie in Figur 1 angedeutet enthält die als Schrauber ausgestaltete Werkzeugmaschine 1 im Wesentlichen ein Werkzeugmaschinengehäuse 2 mit einer Werkzeugaufnahme 3 und einem Handgriff 4.

Die Werkzeugaufnahme 3 dient zum Aufnehmen und Halten eines Werkzeugs 5. Bei dem Werkzeug 5 handelt es sich in dem vorliegenden Beispiel um einen Schrauber-Bit. Alternativ kann das Werkzeug 5 auch als Bohrer ausgestaltet sein.

Im Inneren des Werkzeugmaschinengehäuses 2 ist unter anderem ein Antrieb 6, ein Getriebe 7a, eine Abtriebswelle 7b und eine Steuereinheit 8 vorgesehen. Der Antrieb 6 ist beispielsweise als bürstenloser Elektromotor ausgestaltet und dient zum Erzeugen eines Drehmoments.

Die Steuereinheit 8 regelt und steuert die Funktionen bzw. das Verhalten der Werkzeugmaschine 1 und insbesondere des Antriebs 6.

Der Handgriff 4 enthält wiederum einen Betätigungsschalter 9, ein oberes Ende 4a und ein unteres Ende 4b. Der Betätigungsschalter 9 ist mit der Steuereinheit 8 verbunden, sodass ein Betätigen des Betätigungsschalters 9 zu einer Aktivierung des Antriebs 6 bzw. der Werkzeugmaschine 1 führt.

Wie ebenfalls in Figur 1 gezeigt, ist der Antrieb 6, das Getriebe 7a, die Abtriebswelle 7b und die Werkzeugaufnahme 3 so zueinander angeordnet, dass ein von dem Antrieb 6 erzeugtes Drehmoment über das Getriebe 7a und die Abtriebswelle 7b zu der Werkzeugaufnahme 3 gelangen kann. Durch die Werkzeugaufnahme 3 wird das vom Antrieb 6 erzeugte Drehmoment schließlich auf das Werkzeug 5 übertragen.

Das Werkzeugmaschinengehäuse 2 weist des Weiteren eine Oberseite 2a, eine Unterseite 2b, ein vorderes Ende 2c und ein hinteres Ende 2d auf.

An dem vorderen Ende 2c ist die Werkzeugaufnahme 3 positioniert. An der Unterseite 2b und in der Nähe des hinteren Endes 2d des Werkzeugmaschinengehäuses 2 ist das obere Ende 4a des Handgriffs 4 befestigt. An dem unteren Ende 4b des Handgriffs 4 ist eine Werkzeugmaschinenschnittstelle 10 positioniert. Die Werkzeugmaschinenschnittstelle 10 dient zum wiederlösbaren Verbinden der Werkzeugmaschine 1 mit dem Akkumulator 11.

Der in dem Ausführungsbeispiel beschriebene Akkumulator 11 kann insbesondere als Energiespeichervorrichtung bzw. elektrische Energiequelle für die Werkzeugmaschine 1 dienen. Der Akkumulator 11 enthält dabei im Wesentlichen ein Akku-Gehäuse 12, eine Anzahl an Energiespeicherzellen 13, eine Speichervorrichtung 16, Akku-Schnittstelle 23 sowie eine Steuerungseinrichtung 17. Die Energiespeicherzellen 13 können auch als Akku-Zellen bezeichnet werden.

Die Speichervorrichtung 16 ist im Inneren des Akku-Gehäuses 12 positioniert und dient zu Speichern und Bereitstellen von Daten und Informationen.

Die Akku-Schnittstelle 23 dient zum Verbinden des Akkumulators 11 mittels der Werkzeugmaschinenschnittstelle 10 mit der Werkzeugmaschine 1.

Die Energiespeicherzellen 13 können auch als Akkuzellen bezeichnet werden und dienen zum Aufnehmen, Speichern und erneuten Abgeben elektrischer Energie. Wie in den Figuren angedeutet, sind die Energiespeicherzellen 13 in zylindrischer Form und auf Basis einer Lithium-Ionen-Technologie ausgestaltet. Alternativ können die Energiespeicherzellen 13 auch auf einer anderen geeigneten Technologie basieren. Die zylindrische Form der Energiespeicherzellen 13 ist ebenfalls optional, sodass auch jede andere geeignete Form bzw. Geometrie gewählt werden kann.

Wie in den Figuren angedeutet, weist der Akkumulator 11 gemäß der gezeigten beispielhaften Ausführungsformen eine Vielzahl an Halteeinrichtungen 18 auf. Die Halteeinrichtung dienen zum Aufnehmen und Halten einer Energiespeicherelement 13. Für jede Energiespeicherelement 13 ist jeweils eine Halteeinrichtungen 18 vorgesehen. Wie nachfolgend beschrieben können die Halteeinrichtungen 18 unterschiedlich ausgestaltet sein.

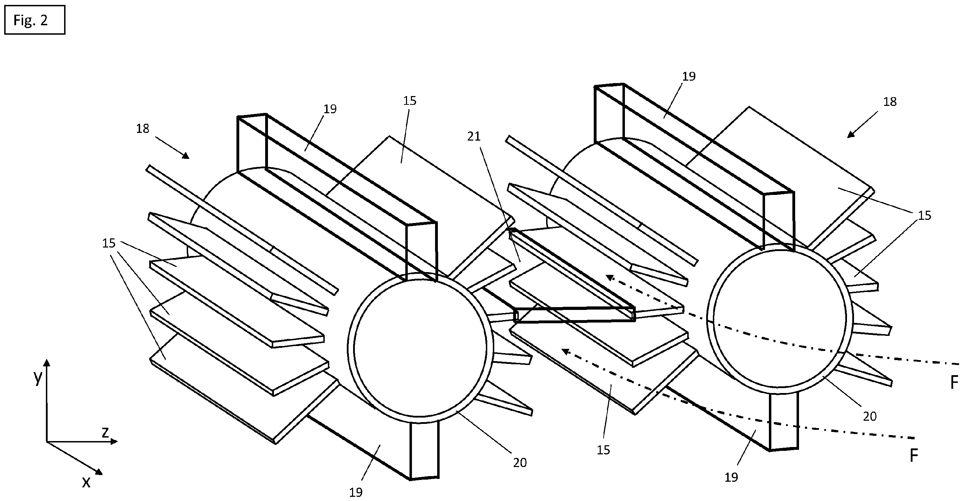

In Figur 2 sind Halteeinrichtungen entsprechend einer ersten beispielhaften Ausführungsform dargestellt. Die Halteeinrichtung 18 gemäß der ersten Ausführungsform enthält eine zylindrische Röhre 20, in die jeweils eine Energiespeicherzelle 13 aufgenommen und gehalten wird. In Figur 2 sind zwei Halteeinrichtungen 18 ohne Energiespeicherzelle 13 gezeigt. An einer Außenmantelfläche 14 sind insgesamt zehn Kühlelemente 15 in Form von Kühlrippen angeordnet. Jeweils fünf als Kühlrippen ausgestaltete Kühlelemente 15 erstrecken sich in radialer Richtung von einer ersten und einer zweiten Seitenfläche der Röhre 20. Zwischen den Halteeinrichtungen 18 ist eine Aussparung 21 vorgesehen, durch welche ein Kühlfluid F (d.h. Luft) strömen kann. Die Kühlelemente ragen in die Aussparung 21 hinein. Mit Hilfe der Kühlelemente 15 kann Wärme von der Halteeinrichtung 18 bzw. von einer Energiespeicherzelle 13, die sich in der Halteeinrichtung 18 befindet, abgegeben werden. Gemäß der ersten Ausführungsform sind die Halteeinrichtungen 18 so im Inneren des Akku-Gehäuses 12 zueinander positioniert, dass die freien Ende der Kühlelemente 15 einer jeden Halteeinrichtung 18 nicht miteinander in Berührung stehen. Wie in Figur 2 angedeutet, sind die Halteeinrichtungen 18 mittels einer ersten Verbindungseinrichtung 19 miteinander verbunden. Die erste Verbindungseinrichtung 19 ist gemäß der ersten Ausführungsform der Halteeinrichtung 18 in Form eines flachen Platte ausgestaltet. Die als Platte ausgestaltete erste Verbindungseinrichtung 19 weist an gegenüberliegenden Seitenkanten eine (in den Figuren nicht gezeigte) Nut auf, in die die freien Ende der Kühlrippen 15 aufgenommen und gehalten werden können. Jeweils zwei Halteeinrichtungen 18 können damit miteinander in einer waagerechten bzw. horizontalen Ebene wiederlösbar und kraftschlüssig verbunden werden. Alternativ können die freien Ende der Kühlrippen 15 einer jeden Halteeinrichtung 18 auch dauerhaft mit der ersten Verbindungseinrichtung 19 verbunden werden. Eine dauerhafte Verbindung kann beispielsweise und zusätzlich zu einer kraft- oder formschlüssigen Verbindung auch über eine stoffschlüssige Verbindung (z.B. durch Klebstoff) erreicht werden.

Eine zweite Verbindungseinrichtung 19 ist an einem oberen Ende der Röhre 20 einer Halteeinrichtung 18 und eine dritte Verbindungseinrichtung 19 ist an einem unteren Ende der Röhre 20 einer Halteeinrichtung 18 vorgesehen. Die zweite und dritte Verbindungseinrichtung 19 sind für die erste Ausführungsform der Halteeinrichtung 18 identisch ausgestaltet und dienen wie auch die erste Verbindungseinrichtung 19 dazu, benachbarte Halteeinrichtungen 18 miteinander zu verbinden. Entsprechend eines ersten Ausführungsbeispiels ist die zweite und dritte Verbindungseinrichtung 19 so ausgestaltet, dass eine untere Seitenkante sowie eine obere Seitenkante jeweils ein Schienenelement aufweisen.

Die Schienenelemente sind in den Figuren nicht dargestellt.

Durch die Schienenelemente kann die zweite Verbindungseinrichtung 19 wiederlösbar an einem oberen Ende der Röhre 20 und die dritte Verbindungseinrichtung 19 wiederlösbar an einem unteren Ende der Röhre 20 verbunden werden, sodass benachbarte Halteeinrichtungen 18 vertikal miteinander verbunden werden können. Anstelle der Schienenelemente kann auch eine Nut-und-Feder-Vorrichtung vorgesehen sein, um die Halteeinrichtungen 18 durch die zweite und dritte Verbindungseinrichtung 19 vertikal miteinander zu verbinden. Die zweite und dritte Verbindungseinrichtung 19 verbinden sich wiederlösbar durch eine kraft- bzw. formschlüssige Verbindung mit den Röhren 20 der Halteeinrichtungen 18. Alternativ oder zusätzlich zu der kraft- bzw. formschlüssige Verbindung kann auch eine stoffschlüssige Verbindung (z.B. durch Klebstoff) möglich sein.

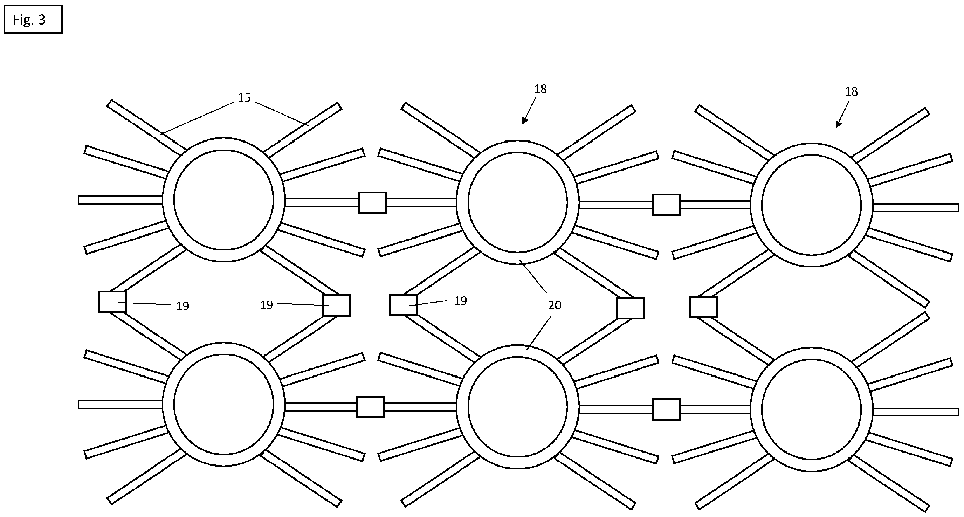

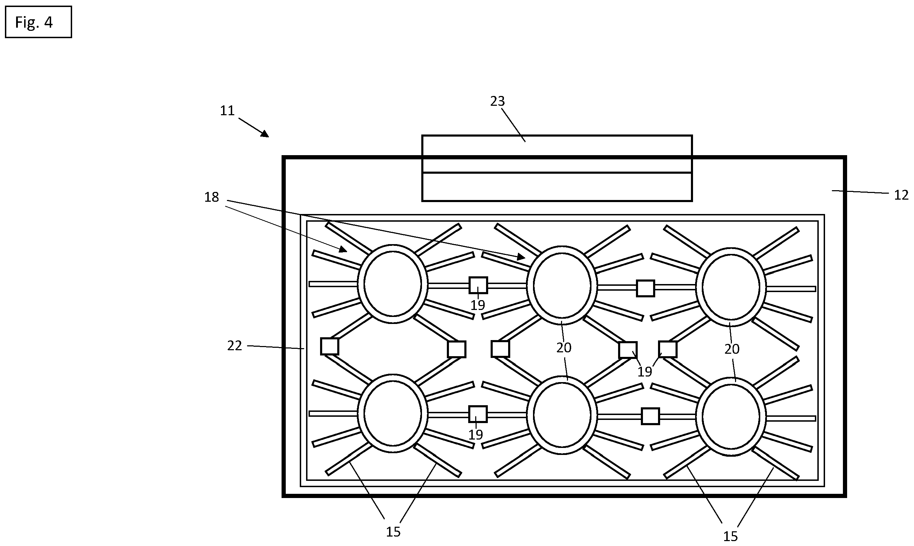

In Figur 3 und 4 ist eine weitere Ausgestaltung zum Verbinden der einzelnen Halteeinrichtungen 18 gemäß der ersten Ausführungsform gezeigt. Die Verbindung benachbarter Halteeinrichtungen 18 in einer waagerechten bzw. horizontalen Ebene erfolgt dabei durch die erste Verbindungseinrichtung 19. Die Verbindung in der vertikalen bzw. senkrechten Ebene mit einer vierten Verbindungseinrichtung 19, die jeweils die freien Enden der untersten Kühlelemente 15 einer oberen Halteeinrichtung 18 mit den jeweils freien Enden der obersten Kühlelementen 15 einer unteren Halteeinrichtung 18 verbinden. Die Verbindung der benachbarten Halteeinrichtungen 18 mit der vierten Verbindungseinrichtung 19 ist gemäß dem gezeigten Ausführungsbeispiel in Figur 3 und 4 durch ein Schienenelement oder eine Nut-und-Feder-Vorrichtung ausgestaltet. Die Verbindung durch die vierte Verbindungseinrichtung 19 ist dabei wiederlösbar ausgestaltet. Alternativ oder zusätzlich kann auch eine stoffschlüssige Verbindung (z.B. durch Klebstoff) vorgesehen sein.

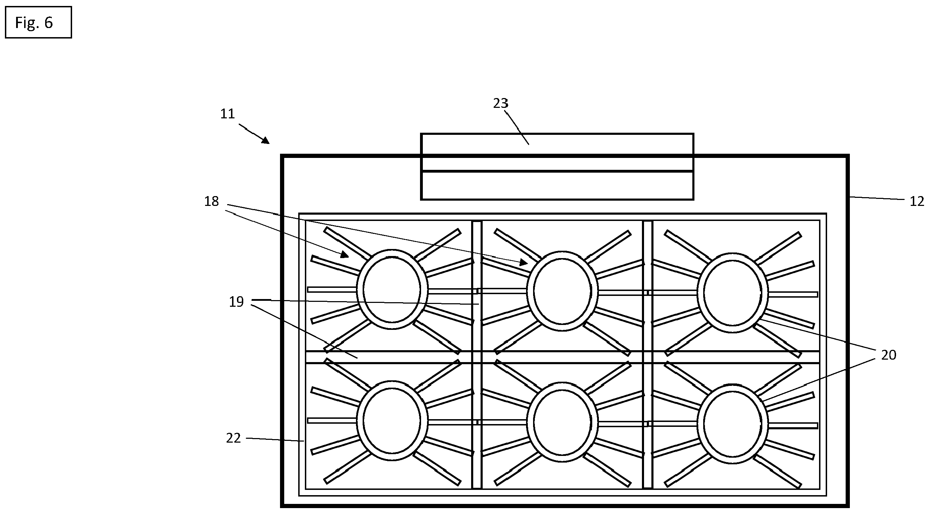

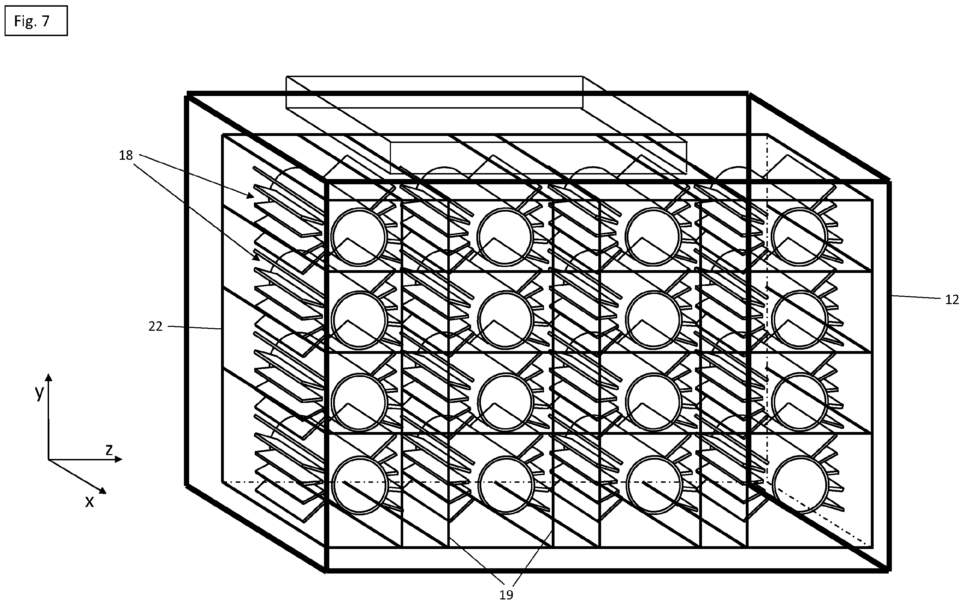

In Figur 6 und 7 sind die Halteeinrichtungen 18 gemäß der ersten Ausführungsform in dem Akku-Gehäuse 12 dargestellt. Die fünfte Verbindungseinrichtung 19 weist gemäß dem in den Figuren 6 und 7 gezeigten Ausführungsbeispiel eine horizontal angeordnete Platte sowie eine vertikal angeordnete Platte auf. Mit Hilfe der fünften Verbindungseinrichtung können die einzelnen Halteeinrichtungen 18 sowohl in einer vertikalen Richtung y und in einer horizontalen Richtung z miteinander verbunden werden. Die Verbindung in der vertikalen bzw. waagerechten Ebene mit der fünften Verbindungseinrichtung 19 erfolgt durch ein Schienenelement oder eine Nut-und-Feder-Vorrichtung, die die freien Enden der jeweiligen Kühlelemente 15 der Halteeinrichtungen 18 miteinander verbinden. Die Schienenelemente und Nut-und-Feder-Vorrichtungen sind in den Figuren nicht gezeigt. Die Verbindung durch die fünfte Verbindungseinrichtung 19 ist dabei wiederlösbar ausgestaltet. Alternativ oder zusätzlich kann auch eine stoffschlüssige Verbindung (z.B. durch Klebstoff) vorgesehen sein.

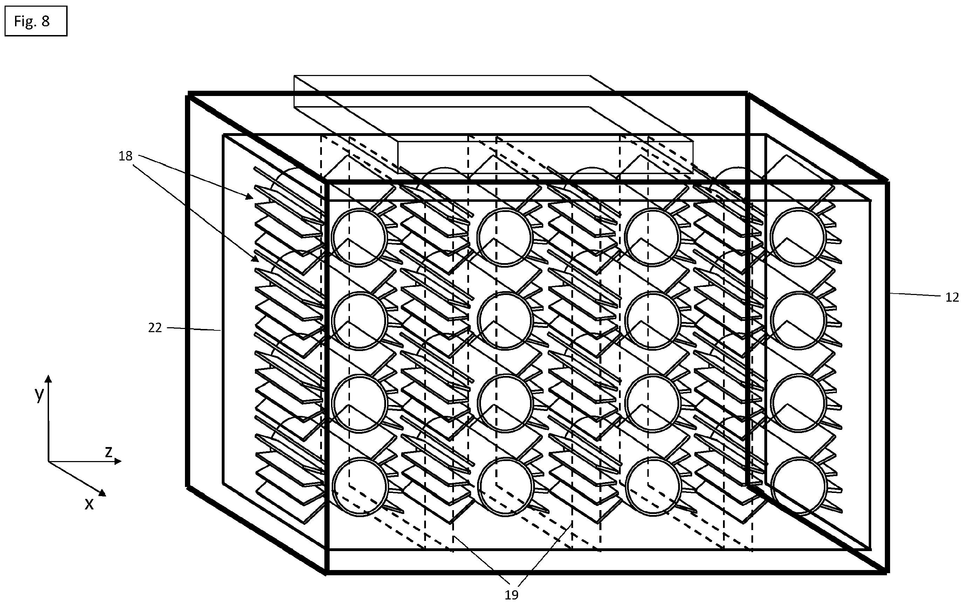

Wie in Figur 8 angedeutet, können benachbarte Halteeinrichtungen 18 gemäß der ersten Ausführungsform durch eine sechste Verbindungseinrichtung 19 vertikal (in Richtung y) sowie waagerecht (in Richtung z) miteinander verbunden werden. Die sechste Verbindungseinrichtung 19 ist hierzu als in vertikaler Richtung y langgezogene Platte ausgestaltet, die sich zum einen über die gesamte Wegstrecke der übereinander angeordneten Halteeinrichtungen 18 und zum anderen über die gesamte Länge der Halteeinrichtung 18 in Richtung x erstreckt. Die als längliche Platte ausgestaltete sechste Verbindungseinrichtung 19 weist in regelmäßigen Abständen an beiden Seitenflächen Aussparungen 21 auf, in die die freien Ende der Kühlrippen der entsprechenden Halteeinrichtungen eingefügt werden. Die Aussparung 21 können auch als Nut bezeichnet werden und sind in den Figuren nicht dargestellt. Alternativ können zusätzlich oder anstelle von einer kraft- oder formschlüssigen Verbindung (d.h. in Form einer Nut) die Halteeinrichtungen 18 mit der sechsten Verbindungseinrichtung 19 auch durch eine stoffschlüssige Verbindung (z.B. durch Klebstoff) verbunden werden.

Die fünfte und sechste Verbindungseinrichtung 19 kann in der jeweiligen Ausgestaltung auch als Rahmenvorrichtung 22 angesehen werden, durch die die Halteeinrichtungen in dem Akku-Gehäuse 12 zusätzlich gehalten werden.

Die Verbindungseinrichtung 19 kann mit der Innenfläche des Akku-Gehäuses 12 verbunden sein. Diese Verbindung kann dabei wiederlösbar oder fest sein.

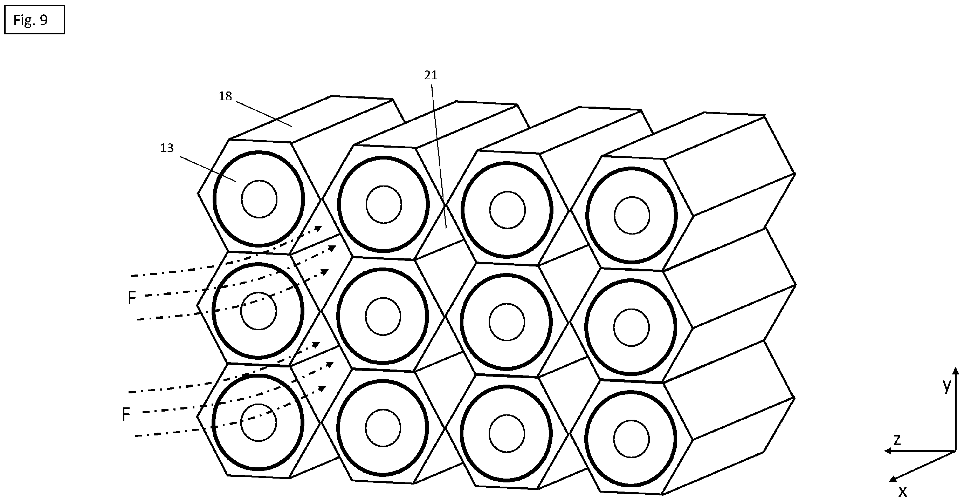

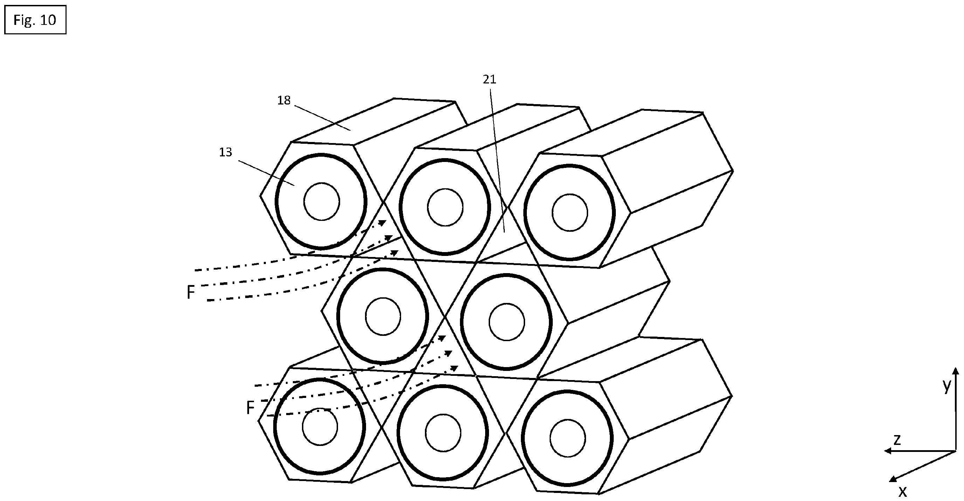

In Figur 9 und 10 sind Halteeinrichtungen 18 gemäß einer zweiten Ausführungsform dargestellt. In der zweiten Ausführungsform weist die Halteeinrichtung 18 eine sechskantige bzw. sechseckige Querschnittsfläche auf. In der Anordnung der Halteeinrichtungen 18, wie in Figur 9 gezeigt, sind Aussparungen 21 (oder auch Freiräume) zwischen angrenzenden Halteeinrichtungen 18 vorgesehen, durch die Luft als Kühlfluid F hindurchströmen kann. Die Querschnittsfläche einer Aussparung 21 ist dabei viereckig bzw. in Form eines Rhombus. Gemäß der Anordnung der Halteeinrichtungen 18, wie in Figur 10 gezeigt, ist die Querschnittsfläche der Aussparungen 21 bzw. Freiräume zwischen angrenzenden Halteeinrichtungen 18 dreieckig ausgestaltet.

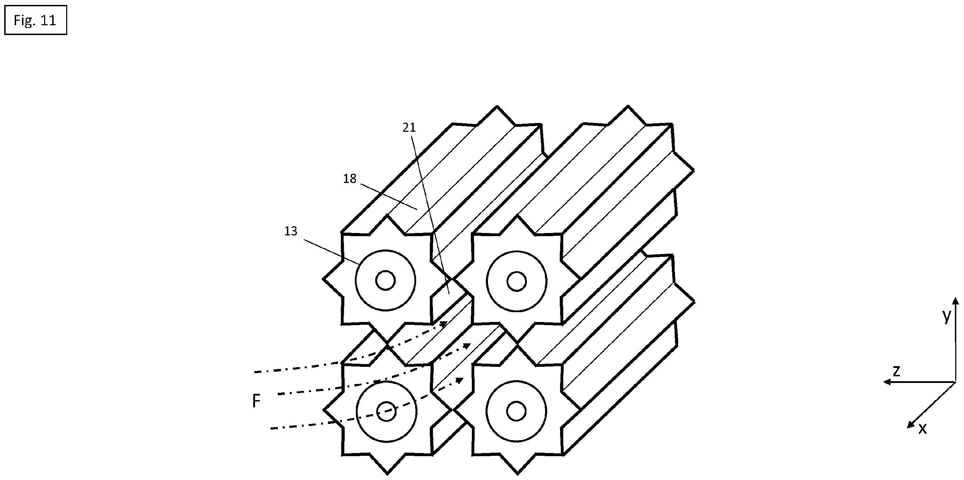

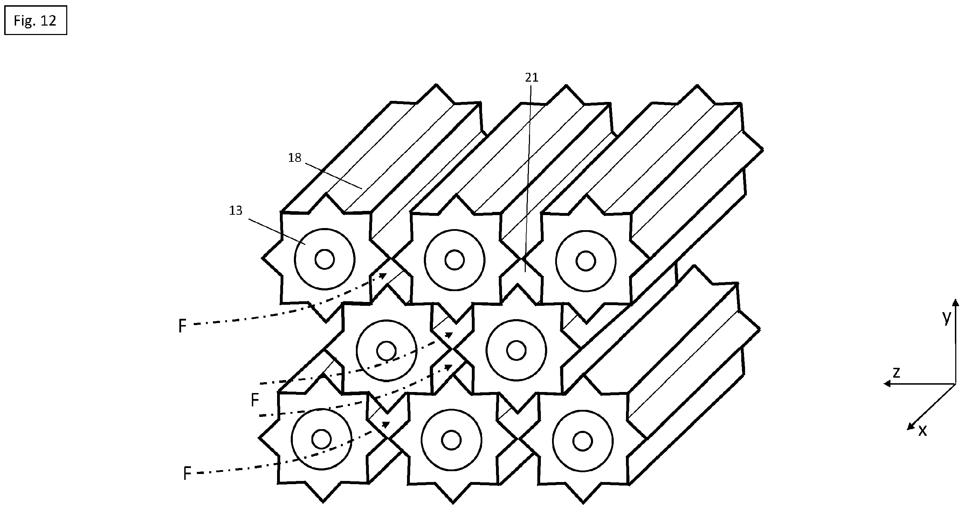

In Figur 11 und 12 sind Halteeinrichtungen 18 gemäß einer dritten Ausführungsform dargestellt. In der dritten Ausführungsform weist die Halteeinrichtung 18 eine achteckige bzw. sternförmige Querschnittsfläche auf. In Figur 11 sind die Halteeinrichtungen 18 gemäß der dritten Ausführungsform in einer ersten Anordnung zueinander gezeigt. Des Weiteren sind in Figur 12 die Halteeinrichtungen 18 gemäß der dritten Ausführungsform in einer zweiten Anordnung zueinander gezeigt.

Die Halteeinrichtungen gemäß der zweiten und dritten Ausführungsform können auch mit der ersten bis sechsten Verbindungseinrichtung kombiniert werden.

### Bezuaszeichenliste

- 1: Werkzeugmaschine
- 2: Werkzeugmaschinengehäuse
- 3: Werkzeugaufnahme
- 4: Handgriff
- 4a: oberes Ende des Handgriffs
- 4b: unteres Ende des Handgriffs
- 5: Werkzeug
- 6: Antrieb
- 7a: Getriebe
- 7b: Abtriebswelle
- 8: Steuereinheit
- 9: Betätigungsschalter
- 10: Werkzeugmaschinenschnittstelle
- 11: Akkumulator
- 12: Akku-Gehäuse
- 13: Energiespeicherzellen
- 14: Außenmantelfläche
- 15: Kühlelement
- 16: Speichervorrichtung
- 17: Steuerungseinrichtung
- 18: Halteeinrichtung
- 19: Verbindungseinrichtung
- 20: Röhre
- 21: Aussparung
- 22: Rahmenvorrichtung
- 23: Akku-Schnittstelle
- F: Kühlfluid

## Patentansprüche

1. Akkumulator (11) als Energieversorgung für eine Werkzeugmaschine (1) mit wenigstens einem ersten und zweiten Energiespeicherelement,
**dadurch gekennzeichnet, dass** wenigstens eine erste Halteeinrichtung (18) zum Aufnehmen und Halten des wenigstens ersten Energiespeicherelements (13) und wenigstens eine zweite Halteeinrichtung (18) zum Aufnehmen und Halten des wenigstens zweiten Energiespeicherelements (13) enthalten ist, wobei wenigstens ein Teilbereich einer Außenmantelfläche der wenigstens ersten und/oder zweiten Halteeinrichtung (18) so ausgestaltet ist, dass zwischen benachbarten Halteeinrichtung (18) wenigstens eine Aussparung (21) für ein Kühlfluid (F) vorgesehen ist.

2. Akkumulator (11) nach Anspruch 1,
**dadurch gekennzeichnet, dass** wenigstens eine Rahmenvorrichtung (22) zum Aufnehmen und Halten der wenigstens ersten und zweiten Halteeinrichtung (18) enthalten ist.

3. Akkumulator (11) nach Anspruch 2,
**dadurch gekennzeichnet, dass** die wenigstens erste und zweite Halteeinrichtung (18) mittels einer Verbindungseinrichtung (19) miteinander verbunden sind.

4. Akkumulator (11) nach Anspruch 3,
**dadurch gekennzeichnet, dass** die Verbindungseinrichtung (19) ausgestaltet ist, dass die die wenigstens erste und zweite Halteeinrichtung (18) wiederlösbar miteinander verbunden sind.

5. Akkumulator (11) nach Anspruch 3,
**dadurch gekennzeichnet, dass** die Verbindungseinrichtung (19) ausgestaltet ist, dass die wenigstens erste und zweite Halteeinrichtung (18) fest miteinander verbunden sind.

6. Akkumulator (11) nach wenigstens einem der Ansprüche 1 bis 5,
**dadurch gekennzeichnet, dass** an wenigstens einem Teilbereich einer Außenmantelfläche der ersten und/oder zweiten Halteeinrichtung (18) wenigstens ein Kühlelement (15) enthalten ist.

7. Akkumulator (11) nach Anspruch 6,
**dadurch gekennzeichnet, dass** das wenigstens eine Kühlelement (15) als Kühlrippe ausgestaltet ist.

8. Akkumulator (11) nach wenigstens einem der Ansprüche 1 bis 7,
**dadurch gekennzeichnet, dass** die wenigstens erste und/oder zweite Halteeinrichtung (18) eine polygone Außenmantelfläche enthält.

9. Akkumulator (11) nach wenigstens einem der Ansprüche 1 bis 8,
**dadurch gekennzeichnet, dass** die wenigstens erste Halteeinrichtung (18) eine erste Ausgestaltung einer Außenmantelfläche und die wenigstens zweite Halteeinrichtung (18) eine zweite Ausgestaltung einer Außenmantelfläche aufweist.

10. Werkzeugmaschine (1) mit wenigstens einem Akkumulator (12) nach wenigstens einem der Ansprüche 1 bis 9.
